# FASCICULE DE BREVET EUROPEEN

(11) **EP 1 832 623 B1**
(45) Date de publication et mention de la délivrance du brevet: **16.09.2009**
(21) Numéro de dépôt: 07300839.3
(22) Date de dépôt: 01.03.2007
(51) Int. Cl.: C08K 3/18, C08K 3/22, H02G 15/08, H01B 3/00, H01B 3/18

(54) **Composition isolante a haute permittivité pour câble électrique ou dispositif de raccordement de tels câbles**
Isolierstoff mit hoher Dielektrizitätskonstante für Stromkabel oder Vorrichtung zum Anschluss solcher Kabel
Insulating composition with high permittivity for an electric cable or connection device for such cables

(30) Priorité: 08.03.2006 FR 0650801
(43) Date de publication de la demande: 12.09.2007
(73) Titulaire: Nexans, 75008 Paris (FR)
(72) Inventeur: Koelblin Christian, 01800, Meximieux (FR); Bayon, Lorrene, 69008, Lyon (FR)
(74) Mandataire: Feray, Valérie

(56) Documents cités:
- FR-A- 2 547 451
- GB-A- 2 012 794
- US-A- 4 275 261
- US-A- 4 363 842
- US-A- 6 124 549
- US-A1- 2003 010 960
- US-B1- 6 184 280
- DATABASE WPI Section Ch, Week 200221 Derwent Publications Ltd., London, GB; Class A12, AN 2002-157905 XP002397383 & JP 2001 206988 A (HAKUSUI KAGAKU KOGYO KK) 31 juillet 2001 (2001-07-31)

## Description

La présente invention concerne une composition isolante à haute permittivité.

Elle s'applique typiquement mais non exclusivement au domaine des accessoires pour câbles électriques, tels que des éléments de raccordement, destinés à contrôler le champ électrique.

De manière générale, on entend par élément de raccordement tout organe capable d'assurer, soit la jonction électrique entre au moins deux câbles électriques, soit la connexion d'au moins un câble électrique à au moins un appareil électrique ou électronique au sens large du terme, encore appelé terminaison.

Le document GB-2 012 794 propose un ruban non-conducteur utilisé comme couche de contrôle de champ dans les terminaisons et les raccords de câbles électriques. Lorsque ledit câble doit être relié électriquement à un élément de terminaison ou à un autre câble électrique, il est nécessaire de dénuder partiellement son extrémité, où se concentrent des lignes de champ électrique. Ce type de ruban isolant permet ainsi d'éviter la concentration du champ électrique à l'extrémité dénudée et donc de limiter le risque de claquage électrique. Ce ruban comprend un polymère de base du type élastomère, une charge dont la permittivité est supérieure à 14 telle que le titanate de baryum ou le dioxyde de titane, et du noir de carbone.

Cependant, le dioxyde de titane doit être ajouté à la composition en quantité importante, de l'ordre de 70 % en poids de la composition du ruban pour obtenir une permittivité élevée nécessaire pour ce type d'application.

Le titanate de baryum, quant à lui, a un coût très élevé et ne permet pas d'obtenir une composition élastomère avec, notamment, une dureté satisfaisante.

Ainsi, les propriétés mécaniques, telles que la dureté ou la résistance à la traction, résultant de ce type de compositions, ne sont en général pas optimisées.

D'autre part, lorsqu'un câble électrique doit être dénudé pour être relié électriquement à un élément de terminaison ou un quelconque élément de raccordement, il laisse apparaître des matériaux semi-conducteurs de couleur noire, des matériaux isolants de couleur claire, ainsi que la couche de contrôle de champ à haute permittivité, de couleur noire, du type précité.

Le poseur d'accessoires se retrouve alors dans une situation où il ne peut distinguer correctement les matériaux semi-conducteurs de la couche de contrôle de champ à haute permittivité, tous deux de couleur noire, pour effectuer son installation.

Le problème technique à résoudre par l'objet de la présente invention est de proposer une composition isolante à haute permittivité permettant d'éviter les problèmes de l'état de la technique en étant notamment sensiblement moins onéreux et plus facile à distinguer, tout en offrant de très bonnes propriétés mécaniques.

A cet effet et selon un premier aspect, l'invention a pour objet une composition isolante linéaire à haute permittivité selon la revendication 1 comprenant une matrice polymère comprenant un élastomère, une charge à haute permittivité, ladite permittivité étant supérieure à 15, de préférence supérieure à 40, et une charge conductrice, la charge conductrice étant une charge dopée par un élément conducteur, et la concentration de la charge conductrice étant inférieure à la concentration correspondant au seuil de percolation de ladite charge conductrice dans la matrice polymère.

Le seuil de percolation est la concentration de la charge conductrice à partir de laquelle la matrice isolante contenant cette charge peut devenir conductrice.

Ainsi, la concentration de la charge conductrice, dans la composition selon la présente invention, est inférieure à la concentration correspondant à son seuil de percolation dans la matrice polymère afin de ne pas avoir une composition du type conductrice avec des pertes diélectriques trop élevées, une chute de la rigidité diélectrique et une tension de claquage trop basse.

De plus, la charge conductrice selon la présente invention ne possède pas de propriété de non-linéarité en tant que telle.

Par conséquent, la composition isolante selon la présente invention est linéaire.

En général, la linéarité obéit à la loi d'Ohm, à savoir I=kV, dans laquelle I est l'intensité, V est la tension, et k une constante.

La présente invention n'a donc pas pour objet une composition non linéaire suivant l'équation du type I=kV^{γ}, dans laquelle γ est une constante supérieure à 1.

Typiquement, lesdites compositions non linéaires formant un élément de contrôle de champ dans un câble à moyenne ou à haute tension ont une constante diélectrique qui varie en fonction du champ électrique.

La concentration de la charge conductrice dopée est limitée à 10 % en volume de la composition afin de ne pas dépasser la concentration correspondant au seuil de percolation.

Grâce à l'invention, la quantité nécessaire de la charge à haute permittivité est réduite de façon significative par l'utilisation d'une charge conductrice dopée et les propriétés mécaniques et électriques de la composition sont optimisées.

Avantageusement, ladite composition est de couleur claire et/ou est colorable.

On entend par couleur claire, toute couleur qui n'est pas foncée ou qui est faiblement colorée.

On entend par charge un matériau solide relativement inerte vis-à-vis de la matrice polymère.

La notion de charge à haute permittivité signifie que la permittivité de ladite charge est supérieure à 15, de préférence supérieure à 40.

Les mesures de permittivité sont faites à 25°C sur des poudres compactées à des champs électriques inférieurs à 10 kV/mm pour une fréquence de 50 Hz, les poudres étant préalablement séchées à 100°C pendant 24h.

On entend par charge dopée l'ajout dans une charge dite « pure » d'un élément de type impureté en petites quantités afin de modifier les propriétés de conductivité de ladite charge, notamment de les améliorer.

Les procédés de dopage, bien connus de l'homme du métier, sont généralement réalisés à des températures élevées de l'ordre de 1000 à 2000°C.

De manière particulièrement avantageuse, la charge dopée est choisie parmi l'oxyde de zinc, le dioxyde de titane ou l'oxyde d'étain, de préférence l'oxyde de zinc.

Les charges conductrices dopées, selon la présente invention, peuvent être obtenues par tout type de procédé permettant auxdites charges d'être linéaire électriquement.

Plus particulièrement, lesdites charges peuvent être obtenues par un procédé pyrométallurgique bien connu de l'homme du métier.

En d'autres termes, lesdites charges, notamment l'oxyde de zinc dopé, ne se présentent pas sous la forme d'une microstructure composée de grains élémentaires partiellement solidaires d'une phase intergranulaire (joints de grains) dans laquelle sont concentrés des éléments dopants, cette microsturucture étant typique des charges non-linéaires.

Lesdites charges conductrices dopées sont, contrairement au noir de carbone, de couleur claire et permettent ainsi à la composition d'être colorée afin de se distinguer de la couleur noire des matériaux semi-conducteurs.

Dans un exemple de réalisation, l'élément conducteur servant au dopage est un métal, de préférence l'aluminium.

La charge dopée par ledit élément conducteur permet d'obtenir des valeurs de conductivité équivalentes, par exemple, au noir de carbone selon les compositions de l'art antérieur, la conductivité de ladite charge étant fonction de sa structure et de la concentration dudit élément conducteur.

L'élément conducteur peut parfois changer la couleur de la charge conductrice. De ce fait, si la couleur obtenue de ladite charge conductrice est trop sombre, il est difficile de colorer ensuite ladite composition.

Ainsi l'élément conducteur ne doit sensiblement pas changer la couleur de la charge qui est dopée ou, tout du moins, la couleur obtenue de la charge conductrice dopée est de préférence claire.

Selon une particularité de l'invention, la charge à haute permittivité est choisie parmi le titanate de baryum, le titanate de strontium ou le dioxyde de titane, de préférence le dioxyde de titane.

En particulier, le dioxyde de titane utilisé de préférence est du type rutile pour son faible coût et sa permittivité plus élevée.

Dans un exemple particulier, le dioxyde de titane subit un traitement de surface hydrophobe qui lui permet, de façon avantageuse, d'être beaucoup moins sensible à une dégradation de ses propriétés en milieu humide, notamment le dioxyde de titane est recouvert d'alumine.

Dans un mode de réalisation préféré, la concentration de la charge à haute permittivité est comprise entre 10 et 30 % en volume de la composition.

La valeur limitative inférieure de cet intervalle permet de garantir une permittivité suffisante de la composition.

Lorsque la concentration de la charge à haute permittivité est supérieure à 30 %, des problèmes de mélange et de mise en forme de la composition peuvent apparaître dus à des modifications des propriétés rhéologiques de ladite composition.

Selon une particularité de l'invention, la composition comprend en outre une charge à moyenne permittivité.

La notion de charge à moyenne permittivité signifie que la permittivité de ladite charge est comprise entre 5 et 15, les mesures de permittivité étant faites dans les mêmes conditions que celles décrites précédemment pour les charges à haute permittivité.

Dans un exemple particulier, la charge à moyenne permittivité est choisie parmi le sulfure de zinc, le sulfate de baryum, le talc, l'alumine ou leur mélange.

Ce type de charges contribue à améliorer les propriétés de vieillissement de la composition, à savoir le sulfure de zinc empêche la dégradation par les microorganismes, le sulfate de baryum contribue à la stabilité de la coloration contre le jaunissement, le talc est connu pour son effet de barrière contre l'humidité et l'alumine permet d'augmenter la conductivité thermique de la composition.

Ces charges ont une dureté faible et sont, à l'exception de l'alumine, peu abrasives, ce qui ne modifient sensiblement pas les propriétés rhéologiques de la composition lors de son mélange et de son moulage.

En particulier, ces charges à moyenne permittivité sont utilisées à des concentrations inférieures à 20 % en volume de la composition.

Selon une autre particularité de l'invention, la composition comprend en outre un agent colorant.

Dans un exemple de réalisation, la concentration de l'agent colorant est inférieure à 5% en volume de la composition.

Ladite concentration est ainsi limitée pour que les propriétés rhéologiques de la composition ne soient pas modifiées.

Les agents colorants utilisés, bien connus de l'homme du métier, sont, par exemple, de l'oxyde de fer ou de l'oxyde de chrome pour obtenir respectivement une coloration rouge ou verte de la composition.

En particulier, du noir de carbone peut également être ajouté en faible quantité, de préférence inférieure à 3% en volume de la composition, afin d'obtenir une coloration grise de la composition.

Selon une autre caractéristique, l'élastomère est choisi parmi l'EPDM ou des résines silicones du type vulcanisables à haute température (HTV), vulcanisables à température ambiante (RTV), ou liquides (LSR).

En particulier, l'élastomère est réticulé, notamment par ajout de peroxyde, de soufre ou de platine dans la matrice polymère.

La matrice polymère peut par ailleurs contenir un ou plusieurs additifs destinés à améliorer une ou plusieurs de ses propriétés finales. Tous les additifs de polymères connus de l'état de la technique sont concernés, comme par exemple des agents plastifiants, des agents antioxydants, des agents stabilisants UV, des agents de couplage, des agents de dispersion, des agents hydrophobes, des agents ignifuges, etc.

Selon d'autres aspects, l'invention concerne un dispositif de raccordement pour câbles électriques, ainsi qu'un câble électrique comportant au moins un élément de contrôle de champ électrique, constitué à partir d'une composition selon l'invention.

Avantageusement, ladite composition isolante à haute permittivité utilisée en tant qu'élément de contrôle de champ électrique permet de limiter les pertes diélectriques et les risques de claquage dans les câbles électriques typiquement à moyenne et à haute tension.

De plus, ladite composition isolante permet de fabriquer un élément de contrôle de champ, notamment avec une géométrie tubulaire, avec une très bonne compacité, c'est-à-dire avec un faible encombrement.

La mise en oeuvre des compositions de type élastomère réticulable dans un câble électrique se fait typiquement par moulage, notamment par injection moulage, ou par tout autre procédé connu.

Les élastomères non réticulables de type mastic sont mis sous presse pour former des plaques utilisables directement sur les câbles électriques.

D'autres caractéristiques et avantages de la présente invention apparaîtront à la lumière des exemples qui vont suivre, lesdits exemples étant donnés à titre illustratif et nullement limitatif.

Afin de montrer les avantages obtenus avec les compositions selon l'invention, le Tableau 1 détaille les différents échantillons dont les propriétés mécaniques et électriques sont étudiées.

**Tableau 1**

| Echantillon | Compositions (% en volume) | | | | | |
|---|---|---|---|---|---|---|
| | Matrice polymère à base d'EPDM | Charge à haute permittivité | | | Charge à moyenne permittivité | Charge conductrice |
| | | TiO₂ non traité | TiO₂ traité | BaTiO₃ | ZnS | ZnO dopé Al |
| 1 | 75 | 15 | | | | 10 |
| 2 | 70 | 25 | | | | 5 |
| 3 | 70 | | 25 | | | 5 |
| 4 | 80 | | | 15 | | 5 |
| 5 | 70 | | | 15 | 10 | 5 |

La matrice polymère utilisée dans les échantillons 1 à 5 comprend principalement de l'EPDM et des additifs bien connus de l'homme du métier tels que des plastifiants, des agents de dispersion, des agents stabilisants, des antioxydants, des activateurs de réticulation, des agents réticulants, etc.

Les charges à haute permittivité utilisées sont les suivantes :
- TiO₂ rutile non traité de la société Tiona, référencée RL-11A,
- TiO₂ rutile traité avec de l'alumine de la société Huntsman, référencée TR-28,
- BaTiO₃ de la société Ferro, référencée 219-3.

La charge à moyenne permittivité est du ZnS de la société Sachtleben, référencée Sachtolith L.

La charge conductrice utilisée est de l'oxyde de zinc dopé à l'aluminium référencé HC-238 de la société American Zinc Corp.

Afin de montrer les avantages obtenus avec les compositions selon l'invention, les échantillons ont été préparés selon le protocole suivant :
- sécher les charges à utiliser dans la composition dans une étuve à 140°C pendant 48h,
- mélanger la matrice polymère à base d'élastomère ainsi que la charge à haute permittivité et la charge conductrice dans un mélangeur interne à 30 tours par minute, à une température de 100°C,
- homogénéiser dans le mélangeur interne à 70 tours par minute à une température de 110°C,
- ajouter l'activateur et l'agent de réticulation dans la composition,
- homogénéiser dans le mélangeur interne à 70 tours par minute à une température de 110°C, et
- mouler et réticuler la composition en formant des plaques dans une presse chauffante maintenue à une température de 160°C, sous une pression de 200 bars pendant 20 minutes.

Après refroidissement et démoulage, les plaques sont coupées pour réaliser les échantillons sur lesquels des tests mécaniques et électriques sont effectués.

Les tests mécaniques sont effectués sur des plaques de 2 mm d'épaisseur, tandis que les tests électriques sont effectués sur des plaques de 80 mm de diamètre dont l'épaisseur est comprise entre 0,5 et 1 mm.

Le tableau 2 rassemble les résultats d'un certain nombre de mesures relevées sur les échantillons 1 à 5 afin d'évaluer leurs propriétés mécaniques et électriques, et notamment la dureté, la permittivité, l'angle de perte, l'allongement à la rupture et la résistance à la traction.

**Tableau 2**

| Echantillon | Dureté (Shore A) | Permittivité | Angle de perte (%) | Allongement à la rupture (%) | Résistance à la traction (MPa) |
|---|---|---|---|---|---|
| 1 | 51 | 6.12 | 2.50 | 854 | 7.9 |
| 2 | 58 | 6.06 | 0.68 | 753 | 8.4 |
| 3 | 52 | 5.38 | 0.45 | 885 | 6.6 |
| 4 | 48 | 7.50 | 2.32 | 741 | 5.2 |
| 5 | 57 | 6.72 | 1.65 | 781 | 6.1 |

Lesdites propriétés doivent être comprises dans une certaine plage de valeur afin d'obtenir une composition selon l'invention apte à être utilisée, par exemple, comme élément de raccordement pour contrôler le champ électrique ou dans les câbles électriques.

Les plages limites de valeurs recherchées pour obtenir des propriétés mécaniques et électriques optimisées de la composition selon l'invention sont les suivantes :
- La dureté Shore A ne doit pas être inférieure à 44. En dessous de cette valeur, il est difficile d'obtenir des propriétés mécaniques optimisées. Au-dessus de 60, la composition réticulée est trop dure et ne peut se poser facilement sur la partie du câble à couvrir et les risques de claquage électrique deviennent alors importants.
- La permittivité, ou constante diélectrique, ne doit pas être inférieure à 5. Sinon, la composition réticulée se comporte alors comme un isolant classique et n'a pas de fonction de contrôle de champ électrique. Au-delà d'une permittivité de 15, la résistance à la traction et l'allongement à la rupture diminuent de façon significative, les pertes diélectriques augmentent et des problèmes de rhéologie apparaissent.
- L'angle de pertes, ou tangente delta, doit être inférieur à 10 %, de préférence inférieur à 5%, sous peine d'entraîner un réchauffement trop important de la composition lors de la mise sous tension d'un câble électrique comprenant une telle composition et provoquer ainsi la détérioration dudit câble.
- L'allongement à la rupture doit être supérieur à 500% afin d'obtenir une composition réticulée suffisamment élastique, notamment pour réaliser des accessoires rétractables à froid.
- La résistance à la traction doit être supérieure à 5 MPa afin d'avoir une résistance suffisante de la composition réticulée vis-à-vis des contraintes mécaniques durant les étapes de production et de pose ainsi que pendant la durée de vie de ladite composition.

Il apparaît de manière particulièrement avantageuse, au vu des résultats du Tableau 2, que l'utilisation d'une charge conductrice dopée dans la composition selon l'invention, ne remet pas en cause les principales propriétés mécaniques et électriques de ce type de composition, tout en gardant l'avantage supplémentaire de pouvoir colorer ladite composition.

La présente invention n'est pas limitée aux exemples de mise en oeuvre qui viennent d'être décrits et porte dans sa généralité sur toutes les compositions envisageables à partir des indications générales fournies dans l'exposé de l'invention.

L'invention peut s'appliquer à tout câble d'énergie de moyenne ou haute tension comportant au moins un élément de contrôle de champ électrique, constitué à partir de la composition selon l'invention.

La composition peut également comprendre des mélanges d'élastomères, des mélanges de charges à haute permittivité ou des mélanges de charges conductrices.

Toutes les charges utilisées dans les compositions selon la présente invention peuvent subir un traitement de surface approprié, préalablement à leur introduction dans la composition, notamment dans le but d'améliorer l'hydrophobie et/ou la dispersion des charges dans la matrice.

Par ailleurs, l'élastomère peut également être semi-liquide ou non réticulé.

De plus, la matrice polymère peut également comprendre un élastomère ayant une permittivité intrinsèque élevée.

## Revendications

1. Composition isolante linéaire à haute permittivité comprenant :
- une matrice polymère comprenant un élastomère,
- une charge à haute permittivité, ladite permittivité étant supérieure à 15, de préférence supérieure à 40, et
- une charge conductrice,
**caractérisée en ce que** la charge conductrice est une charge linéairement conductrice dopée par un élément conducteur, et **en ce que** la concentration de la charge conductrice est inférieure ou égal à 10 % en volume de la composition.

2. Composition selon la revendication 1, **caractérisée en ce que** la charge dopée est choisie parmi l'oxyde de zinc, le dioxyde de titane ou l'oxyde d'étain, de préférence l'oxyde de zinc.

3. Composition selon la revendication 1 ou 2, **caractérisée en ce que** l'élément conducteur est un métal, de préférence de l'aluminium.

4. Composition selon l'une quelconque des revendications 1 à 3, **caractérisée en ce que** la charge à haute permittivité est choisie parmi le titanate de baryum, le titanate de strontium ou le dioxyde de titane, de préférence le dioxyde de titane.

5. Composition selon l'une quelconque des revendications 1 à 4, **caractérisée en ce que** la concentration de la charge à haute permittivité est comprise entre 10 et 30 % en volume de la composition.

6. Composition selon l'une quelconque des revendications 1 à 5, **caractérisée en ce que** l'élastomère est choisi parmi l'EPDM ou des résines silicones.

7. Composition selon l'une quelconque des revendications 1 à 6, **caractérisée en ce que** la composition comprend en outre une charge à moyenne permittivité, ladite permittivité étant comprise entre 5 et 15.

8. Composition selon la revendication 7, **caractérisée en ce que** la concentration de la charge à moyenne permittivité est inférieure à 20 % en volume de la composition.

9. Composition selon l'une quelconque des revendications 1 à 8, **caractérisée en ce que** la composition comprend en outre un agent colorant.

10. Composition selon la revendication 9, **caractérisée en ce que** la concentration de l'agent colorant est inférieure à 5 % en volume de la composition.

11. Dispositif de raccordement pour câbles électriques, **caractérisé en ce qu'**il comporte au moins un élément de contrôle de champ électrique, constitué à partir d'une composition selon l'une quelconque des revendications 1 à 10.

12. Câble électrique, **caractérisé en ce qu'**il comporte au moins un élément de contrôle de champ électrique, constitué à partir d'une composition selon l'une quelconque des revendications 1 à 10.

## Claims

1. A high permittivity linear insulating composition comprising:
- a polymeric matrix comprising an elastomer,
- a high permittivity filler, said permittivity being larger than 15, preferably larger than 40, and
- a conductive filler,
**characterized in that** the conductive filler is a linear conductive filler doped with a conductive element, and **in that** the concentration of the conductive filler is less than or equal to 10% by volume of the composition.

2. The composition according to claim 1, **characterized in that** the doped filler is selected from zinc oxide, titanium dioxide or tin oxide, preferably zinc oxide.

3. The composition according to claim 1 or 2, **characterized in that** the conductive element is a metal, preferably aluminium.

4. The composition according to any of claims 1 to 3, **characterized in that** the high permittivity filler is selected from barium titanate, strontium titanate or titanium dioxide, preferably titanium dioxide.

5. The composition according to any of claims 1 to 4, **characterized in that** the concentration of the high permittivity filler is comprised between 10 and 30% by volume of the composition.

6. The composition according to any of claims 1 to 5, **characterized in that** the elastomer is selected from EPDM or silicone resins.

7. The composition according to any of claims 1 to 6, **characterized in that** the composition further comprises a medium permittivity filler, said permittivity being comprised between 5 and 15.

8. The composition according to claim 7, **characterized in that** the concentration of the medium permittivity filler is less than 20% by volume of the composition.

9. The composition according to any of claims 1 to 8, **characterized in that** the composition further comprises a coloring agent.

10. The composition according to claim 9, **characterized in that** the concentration of the coloring agent is less than 5% by volume of the composition.

11. A connecting device for electric cables, **characterized in that** it includes at least one element for controlling an electric field, formed from a composition according to any claims 1 to 10.

12. An electric cable, **characterized in that** it includes at least one element for controlling an electric field, formed from a composition according to any claims 1 to 10.

## Patentansprüche

1. Lineare isolierende Zusammensetzung mit hoher Permittivität, umfassend:
- eine Polymermatrix, ein Elastomer umfassend,
- eine Ladung mit hoher Permittivität, wobei die Permittivität höher als 15 ist, vorzugsweise höher als 40, und
- eine leitende Ladung,
**dadurch gekennzeichnet, dass** die leitende Ladung eine linear leitende Ladung ist, die von einem leitenden Element unterstützt wird, und **dadurch**, dass die Konzentration der leitenden Ladung kleiner oder gleich 10 Volumenprozent der Zusammensetzung ist.

2. Zusammensetzung nach Anspruch 1, **dadurch gekennzeichnet, dass** die unterstützte Ladung aus dem Zinkoxid, dem Titandioxid oder dem Zinnoxid, vorzugsweise dem Zinkoxid, ausgewählt ist.

3. Zusammensetzung nach Anspruch 1 oder 2, **dadurch gekennzeichnet, dass** das leitende Element ein Metall ist, vorzugsweise Aluminium.

4. Zusammensetzung nach einem der Ansprüche 1 bis 3, **dadurch gekennzeichnet, dass** die Ladung mit hoher Permittivität aus dem Bariumtitanat, dem Strontiumtitanat oder dem Titandioxid, vorzugsweise dem Titandioxid, ausgewählt ist.

5. Zusammensetzung nach einem der Ansprüche 1 bis 4, **dadurch gekennzeichnet, dass** die Konzentration der Ladung mit hoher Permittivität zwischen 10 und 30 Volumenprozent inklusive der Zusammensetzung ist.

6. Zusammensetzung nach einem der Ansprüche 1 bis 5, **dadurch gekennzeichnet, dass** das Elastomer aus dem EPDM oder den Silikonharzen ausgewählt ist.

7. Zusammensetzung nach einem der Ansprüche 1 bis 6, **dadurch gekennzeichnet, dass** die Zusammensetzung weiterhin eine Ladung mit mittlerer Permittivität umfasst, die zwischen 5 und 15 inklusive ist.

8. Zusammensetzung nach Anspruch 7, **dadurch gekennzeichnet, dass** die Konzentration der Ladung mit mittlerer Permittivität kleiner als 20 Volumenprozent der Zusammensetzung ist.

9. Zusammensetzung nach einem der Ansprüche 1 bis 8, **dadurch gekennzeichnet, dass** die Zusammensetzung weiterhin einen Farbstoff umfasst.

10. Zusammensetzung nach Anspruch 9, **dadurch gekennzeichnet, dass** die Konzentration des Farbstoffs kleiner als 5 Volumenprozent der Zusammensetzung ist.

11. Vorrichtung zur Verbindung für elektrische Kabel, **dadurch gekennzeichnet, dass** sie mindestens ein Element zur Überprüfung des elektrischen Felds umfasst, das von einer Zusammensetzung nach einem der Ansprüche 1 bis 10 gebildet wird.

12. Elektrisches Kabel, **dadurch gekennzeichnet, dass** es mindestens ein Element zur Überprüfung des elektrischen Felds umfasst, das von einer Zusammensetzung nach einem der Ansprüche 1 bis 10 gebildet wird.
